(19) Europäisches Patentamt
European Patent Office
Office européen des brevets

(11) EP 2 302 480 B1

(12) **EUROPEAN PATENT SPECIFICATION**

(45) Date of publication and mention of the grant of the patent:
**08.02.2012 Bulletin 2012/06**

(21) Application number: **08775394.3**

(22) Date of filing: **23.05.2008**

(51) Int Cl.:
***G05D 1/00*** *(2006.01)*

(86) International application number:
**PCT/ES2008/000366**

(87) International publication number:
**WO 2009/141461 (26.11.2009 Gazette 2009/48)**

(54) **WHEELCHAIR AND METHOD FOR CORRECTING THE GUIDANCE OF A WHEELCHAIR**

ROLLSTUHL UND VERFAHREN ZUM KORRIGIEREN DER LENKUNG EINES ROLLSTUHLS

CHAISE ROULANTE ET PROCÉDÉ PERMETTANT DE CORRIGER LA CONDUITE D'UNE CHAISE ROULANTE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**30.03.2011 Bulletin 2011/13**

(73) Proprietor: **FUNDACION FATRONIK**
**20009 San Sebastian (ES)**

(72) Inventors:
- **SMITHERS, Tim**
**E-20009 San Sebastian (ES)**
- **ANTERO URRUTICOECHEA, Unai**
**E-20009 San Sebastian (ES)**
- **ESNAOLA CAMPOS, Urko**
**E-20009 San Sebastian (ES)**

(74) Representative: **Carpintero Lopez, Francisco**
**Herrero & Asociados, S.L.**
**Alcalá 35**
**28014 Madrid (ES)**

(56) References cited:
**EP-A- 1 548 534**
**FR-A- 2 660 454**
**US-A- 4 511 825**
**US-A1- 2005 279 551**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 302 480 B1

## Description

## OBJECT OF THE INVENTION

The present invention relates to a wheelchair and a method to correct a wheelchair driving. More specifically, the invention refers to a controller that combines the orders of the user and the availability of free space around the wheelchair in order to produce the final instructions that will move the wheelchair.

## BACKGROUND OF THE INVENTION

An electric wheelchair is a kind of mobile platform. It provides the user, the driver, with a control interface, usually a joystick, which allows the forward speed of the wheelchair to be controlled, via forward and backward movements of the joystick, as well as the rotation speed, via left and right movements of the joystick.

Adding sensors that can detect open space sufficient for the wheelchair to move into, and using the sensor data to determine the motion control commands, forward speed and rotation speed, needed to keep the wheelchair moving along an obstacle free path, converts an electric wheelchair into a kind of mobile robot.

To be useful and effective, mobile robots must move around without hitting things; walls, objects, people, etc. Obstacle avoidance has thus been a subject of investigation in the field of mobile robotics since its earliest days. There are now many published techniques using infra-red sensors, sonar sensors, scanning laser range finders, radar, and artificial vision systems to detect obstacles, and recognise places.

Early work was done by Moravec and Elfes using sonar sensors [Moravec, H & Elfes, A, 1985: High resolution maps from wide angle sonar, Proc ASME International Computers in Engineering Conference, Boston, MA, pp 375-80]. Significant improvements, again using sonar sensors, were reported by Borenstein and Koren [Borenstein, J & Koren, Y, 1991: The vector field histogram--fast obstacle avoidance for mobile robots, IEEE Transactions on Robotics and Automation, Vol 7, no 3, June, pp 278-88], who also obtained a patent for a version of their techniques [Borenstein et al, 1991: United States Patent, Obstacle-avoiding navigation system, Patent number 5,006,988, April 9, 1991].

Subsequent work in mobile robotics has essentially adopted one of two approaches: (i) simple sensing and obstacle avoiding methods; and (ii) sophisticated sensing and world modelling methods using laser range finders and machine vision techniques for obstacle detection and navigation. The first, simpler, approach goes under the name of Behaviour-based robotics, and the main results of this work are reported by Arkin [Arkin, R C, 1998: Behaviour-based Robotics, MIT Press, Cambridge, MA] and Brooks [Brooks, R A, 1999: Cambrian Intelligence The Early History of the New Al, MIT Press, Cambridge, MA].

The second approach, often referred to as the Classical approach, has developed various techniques for implementing what is called the Sense-Model-Plan-Act Cycle: sensor systems are used to obtain information about the world around the robot: the surfaces, walls, and other object geometries and where they are. This information is then used to form a model or a map of the world the robot operates in; either a local map that is updated as the robot moves; or a global map incrementally developed as the robot moves around its world. The model or map is then used to a plan an obstacle free path, a trajectory, for the subsequent motion, and the resulting motion plan is executed action.

The cycle is then repeated with new sensor data which typically results in new information about the world, modifications to the world model, and possibly the need to re-plan a new obstacle free path.

These Classical approaches incorporate obstacle avoidance into navigation so that planning and going from one place to another includes planning and executing obstacle avoidance actions. The results of this Classical approach are well summarised by Kortenkamp et al [Kortenkamp, D, Basso, R, P, & Murphy, R, 1998: Artificial Intelligence and Mobile Robots, AAAI Press Menlo Park, CA, and MIT Press, Cambridge, MA], including so called hybrid solutions that seek to combine both Behaviour-based and Classical methods. More recent work in mobile robot obstacle avoidance and navigation has been dominated by the development and use of sophisticated statistical approaches to representing and reasoning about sensor data and explicitly modelling the inevitable uncertainty in sensor data. These are called SLAM methods, Simultaneous Localisation And Mapping, and the main results are well reviewed in [Thrun, s, Burgard, W, & Fox, D, 2005: Probabilistic Robotics, MIT Press, Cambridge, MA].

Adding sensor based motion control and navigation to an electric wheelchair turns it into an autonomous robot carrying a person as a passenger, a robotic wheelchair. This is not the typical nor desirable use of electric wheelchairs: users want and need to be able to control to where and how their wheelchair moves.

Several research groups have investigated this Human-Robotic Wheelchair interaction issue, see [Yanco, H, A, 1998: Integrating Robotic Research: A survey of robotic wheelchair development, Proc AAAI Spring Symposium on Integrating Robotics Research, Stanford University, CA, AAAI Press] for a brief review. Of the five robotic wheelchairs reviewed by Yanco, four attempt to automate navigation, using laser and vision sensors, leaving the user to indicate where he or she wants to go-from a list or map of pre-identified places.

To deal with so called "conflict" situations, in which the user wants to go in a different direction to the one the wheelchair decides to take, these interface systems offer two or more different levels of control, and the user has to switch between them in order to have more or less overall control of the wheelchair motion. The fifth wheelchair project presents a low cost approach, but this too seeks to automate navigation, treating obstacle avoidance as part of navigation, see [Miller D, P, & Slack, M, G, 1995: Designing and testing a low-cost robotic wheelchair prototype, Autonomous Robotics, Vol 2, pp 77-88]. All these approaches, treat the human control and robotic control as some kind of explicit combination problem, ranging from full robotic, automatic, control to full human control, usually with one or two intermediate combinations in between for the user to select. Later work by Miller has investigated an alternative approach in which the robotic wheelchair system decides when to switch between different combinations of human user and robotic control, see [Miller, D, P, 1999: Semi-autonomous mobility verses semi-mobile autonomy, in Proc AAAI Spring Symposium on Agent with Adjustable Autonomy, AAAI Press, Menlo Park, CA].

One of the inventions that reflects some of the aspects described hereinabove is the French patent 2660454. Said patent relates to a procedure for automatic driving a wheelchair with the possibility of changing the mode of operation from an automatic mode to manual in complicated circumstances. The wheelchair includes a number of sensors that allows its operation in automatic mode, for example, to maintain a fixed distance to a sidewall or centred between two walls, the machine also includes the ability to automatically stop in extreme situations.

The American application US 2004/0220735 discloses a wheelchair which includes a device for detecting collisions. To that end, the wheelchair incorporates a series of sensors that detect contact or collision with an object. In this situation, the device stops the motor of the wheelchair, or the brakes are applied. The system then prompts the operator to acknowledge the collision and guides the operator into the appropriate direction to move the vehicle's controls in order to move away from the object collided with.

Another solution to the problem proposed is described in the American application US 2006/0180368. In this case, the application relates to a wheelchair which includes a cruise control system that controls the speed, so that the speed is maintained within a desired range, preferably in the steep ups and downs, so that the chair does not stop on a very steep uphill nor take an excessive speed in a downhill.

On the other side, the Japanese patent JP 11290390 shows a system for the autonomous driving of a wheelchair, so that from the information entered into the system for driving, the system calculates the route from the point of origin to destination. The system incorporates a device that allows to avoid obstacles.

The American patent US 7204328 refers to a wheelchair that incorporates a system for the assistance to the navigation that includes sensors to detect obstacles. When the obstacles are found, the system automatically takes control of the wheelchair.

In summary, work on robotic wheelchairs typically use expensive sensor systems and combine obstacle avoidance and navigation into a fully automated navigation and motion control system. Human users are ideally supposed to give "high-level" navigation commands to these systems, but are also offered various different levels of control to deal with situations in which the robotic system attempts to do something the user does not want to do, or to free the wheelchair when it gets into trouble trying to do something it cannot do. The motion control is thus always some kind of combination of two mutually exclusive modes of control: the human user and the robotic wheelchair.

## BRIEF DESCRIPTION OF THE INVENTION

On a first aspect, the invention relates to a wheelchair. Said wheelchair comprises a propulsion means for at least two drive wheels. Said propulsion means can be, for example, a battery that provides electric power to two motors, one connected to each drive wheel.

In order to select the user desired path, the wheelchair comprises a user movement indicator means, typically a joystick or a set of five keys along the four main directions and an additional key for extra movement features. Therefore, the user will be able to indicate a forward, backward movement and a rotation movement, both to the left and to the right.

The wheelchair, on their corresponding left and right arm, includes at least one set of sensor to detect at least one value referring to a surrounding free space around the wheelchair. The surrounding free space refers to an area where the wheelchair can move into without causing any trouble to the wheelchair and its user and to the rest of people and artefacts around the wheelchair. The number of sensor on each set may vary, being the minimum three on each side of the wheelchair. A better option is to allow four sensors. Wheelchair with five, six or more sensors are indeed preferable than the wheelchair with just three. The sensor arrangement on each set of sensors comprises a first sensor at the front of the wheelchair, oriented to the forward direction. A last sensor will be place, on the left arm, controlling the left area of the wheelchair; that is, at 90 degrees to the left from the forward movement direction. The last sensor of the right arm will be arranged on an analogous position, that is, controlling an area that is at 90 degrees from both left and right first sensors and 180 degrees from the last left sensor. The rest of the sensors will be arranged evenly on each arm, between the first and the last sensor.

The technology of the sets of sensors can be ultra-sound sensor, infra-red sensor or any other technology, like sonar sensors, scanning laser range finders, radar, or artificial vision systems. Any of these technologies will be arranged to provide a coverage equivalent to the distribution disclosed in the previous paragraph. It is possible to provide a wheelchair with two or more sensor sets, one using ultra-sound technology and another one with infra-red technology, for example.

The wheelchair of the present invention includes a controller that comprises means to obtain a linear movement component value and a rotation movement component value from the data produced by the movement indicator means. Any direction selected by the wheelchair user will be decomposed in two components. The first one refers to a linear movement that will explain the forward and backward movements along a preset direction. The second one refers to the rotation that the user wants to perform. This second component will not imply any forward or backward movement, the wheelchair will stay on its place, but it will rotate to the left or to the right depending on the sense that the user has selected.

Similarly, the controller will produce for every set of sensors a linear and rotation surrounding free space value.

The controller in the present invention additionally comprises means to combine the instructions of the user on the linear and rotation component with the surrounding free space values according to the linear and rotation component. The combination of the user instruction linear component and the surrounding free space linear component values will provide a final or total linear movement that is the linear movement that will drive the propulsion means and, therefore, the driving wheels. Similarly, the combination of the user instruction rotation component and the surrounding free space rotation component values will provide a final or total rotation movement that is the rotation movement that will drive the propulsion means and, therefore, the driving wheels.

The advantage of this wheelchair is that the controller that will drive the wheels is always the same controller, that is, the controller will not be switched on and off depending on the circumstances, the controller will be always monitoring the user driving style. Said controller will consider at the same time the instructions provided by the user and the availability of free space around the wheelchair. This fact allows the user to effectively drive the wheelchair given that his or her instructions will not be overridden if an obstacle is found. If an obstacle is found in the direction that the user wants to go, the controller will not turn to avoid said obstacle. The controller will stop the wheelchair and at this point the user will decide how to overcome the obstacle. Thus, the controller will not order a movement in a direction not desired by the user. The controller will adjust or modify the user instructions according to the availability of free space.

The combination of the user instruction values and the values of the surrounding free space according to the linear and rotation components may be obtained using the harmonic mean of all the values considered. The total linear movement may be obtained calculating the harmonic mean of the linear movement component value obtained from the movement indicator means, that is, the user instructions linear component, and the different values of the surrounding free space in a linear component obtained by means of the different sets of sensors. These different values of the surrounding free space correspond to the different values calculated for each sensor set or sensor technology. If only ultra-sound technology is used, the harmonic mean will be calculated for these two values, if infra-red sensors are also used, the harmonic mean will be calculated for these three values. Alternatively, the harmonic or arithmetic mean may be calculated for all the data from the different sensor sets and then calculate the harmonic mean of the mean of the sensor data and the user instruction value. Identically, mutatis mutandis, may be performed to calculate the total rotation movement.

In the event that the sensors do not work, this will not imply a wrong performance of the wheelchair, given that the user would be still left with full conventional control, albeit without any sensor aided obstacle avoidance. In case that there is a wrong performance on the sensors, the output of these sensors will be bypassed or neglected and the wheelchair will operate according to the user instructions.

The main advantage of the harmonic mean is that the harmonic mean of a group of values containing cero will be always cero, irrespectively on the total number of values and the actual value of them. Therefore, if the controller assigns cero to the situation where the user does not request movement on a linear or rotation direction, the wheelchair will not move on said linear or rotation direction. Moreover, if the controller assigns cero to those situations where there is no free space on the linear or rotation direction, as soon as there is no free space on said directions, the wheelchair will not move on said directions. Thus, an obstacle or the absence of user instructions will stop the wheelchair, no matter what the user instructions or free space are in said situations.

In order to combine the linear movement component value obtained from the movement indicator means and the, at least one, value of the surrounding free space in a linear component to produce a total linear movement and to combine the rotation movement component value obtained from the movement indicator means and the, at least one, value of the surrounding free space in a rotational component to produce a total rotational movement, a microcontroller or a field-programmable gate array device, or any other easily programmed device, may be used.

On a second aspect, the invention discloses a method to correct a wheelchair driving. Correct the wheelchair driving does not mean to perform movements that the user has not ordered or requested, that is, turn the wheelchair when the user goes straight to an obstacle. To correct the wheelchair driving means to adapt the user instructions to the availability of free spaces around the wheelchair, so that if there is an obstacle and the user neglects it, the wheelchair will stop.

The method comprises the steps of acquiring a wheelchair user movement indication, that is, the user instructions. Said instructions may be provided with a joystick or with a keypad. The user movement indications will be transformed, obtaining a linear movement component and a rotation movement component of said movement indications.

It will be necessary too to acquire at least one set of values of the surrounding free space around the wheelchair. Each set of values will correspond to a different set of sensors. The sensors sets will be described according to their technology. As in the previous case, from those sets of values of the surrounding free space around the wheelchair, a linear component and a rotation component of said sets of values will be obtained.

According to the invention, the method additionally comprises the step of combining the linear movement component of the wheelchair user movement indication and the linear component of the, at least one, set of values of the surrounding free space around the wheelchair to obtain a total linear movement. Mutatis mutandis, a total rotation movement will be obtained. The wheelchair will be driven, not according to the wheelchair user movement indications or to the surrounding free space detected, but according to the total linear movement and the total rotational movement obtained.

The combination of the linear movement component of the wheelchair user movement indication and the linear component of the, at least one, set of values of the surrounding free space around the wheelchair to obtain a total linear movement may be made calculating the harmonic mean of said linear movement component of the wheelchair user movement indication and said linear component of the, at least one, set of values of the surrounding free space around the wheelchair. In case that there is more than one set of sensors, the harmonic mean of all the different values can be calculated, or a first mean of said linear component sensor data, being said mean the arithmetic or harmonic mean, may be calculated and then calculate the harmonic mean of said mean and the linear movement component of the wheelchair user movement indication.

The combination of the rotation components may be performed using an analogous procedure as the procedure used to calculate the linear components.

## BRIEF DESCRIPTION OF THE DRAWINGS

To complement the description being made and for the purpose of aiding to better understand the features of the invention according to a preferred practical embodiment thereof, a set of drawings is attached as an integral part of said description, showing the following with an illustrative and non-limiting character:

Figure 1.- Shows a perspective view of a wheelchair according to the present invention.

Figure 2a.- Shows a flow chart of the process defined on the present invention to process the sensor data.

Figure 2b.- Shows a flow chart of the process defined on the present invention to calculate the surrounding free space linear component, $\alpha_s$.

Figure 2c.- Shows a flow chart of the process defined on the present invention to calculate the surrounding free space left and right rotation component, $\beta_{sl}$ and $\beta_{sr}$.

Figure 3.- Shows a five button cross device to drive the wheelchair.

## PREFERRED EMBODIMENT OF THE INVENTION

In view of the discussed figures, a possible embodiment of a wheelchair according to the invention is disclosed.

Figure 1 shows a wheelchair. Said wheelchair comprises two drive wheels 1, two caster wheels, two arms, propulsion means that drive the two drive wheels 1 and a wheelchair user movement indicator means 2, in this case a joystick. The propulsion means are powered by an electric battery. In both arms three ultra-sound sensors 3, 4 and 5 can be observed, forming an array of sensors. The first sensor 3 on each arm is oriented forward, the second sensor 4 is oriented 45 degrees left from the forward direction in the left arm and 45 degrees right from the forward direction on the right arm, finally, the third sensor 5 is oriented 90 degrees left and right on the left and right arm.

In each ultra-sound array of three sensors 3, 4 and 5, left and right, each sensor 3, 4 and 5 is fired in turn, with enough time between the firing of each sensor 3, 4 and 5 for any reflected sound wave from surfaces up to three to four meters away to be detected by the fired sensor 3, 4 and 5 device. The sensor arrays on the left and the right can be operated synchronously, so that two ultra-sound sensors 3, 4 and 5 are fired at the same time. The best arrangement is to fire the corresponding pairs of sensors in each array at the same time: both forward facing sensors 3, followed by the two sensors at 45 degrees 4, left and right, and finally the two sensors at 90 degrees 5.

The data from each sensor 3, 4 and 5 in each sensor array is then processed in the following way, where $d_{max}$ is a system parameter set to an open space distance value, usually corresponding to a distance of between 3.0 meters to 3.5 meters, and $d_{min}$ is a system parameter set to a minimum safe distance corresponding to between 0.3 meters and 0.5 meters. Said processing is schematically shown in figure 2a.

For the current sensor value, that is, centimetres or milliseconds of flight, of the sensor at angle $\theta$ in the left

array, $srL(\theta_i)$, where $\theta$ = {-0º, -45º, - 90º} in the case of a three sensor array, the processed sensor value, $snL(\theta_i)$, is equal to $d_{max}$ if the sensor value $srL(\theta_i)$ is equal or greater than $d_{max}$ or if there is no return, indicating that the sensor did not detect any reflection of its emitted sound wave. If the sensor value $srL(\theta_i)$ is less or equal than $d_{min}$, the processed value $snL(\theta_i)$ is equal to zero.

If the current sensor value is No Return, the sensor value $srL(\theta_i)$ is set to $d_{max}$, except if the previous sensor value, at the previous moment in time, t-1, was less than $d_{max}$, then the new sensor value is set to the previous value plus a pre-defined increment, $S_{delta}$. This increment value, $S_{delta}$, is usually ten percent of the open space distance value, $d_{max}$.

$$srL(\theta_i)[t] = srL(\theta_i)[t-1] + S_{delta}$$

The previous process could be implemented on a software programme following the instructions listed below:

```
FOR i = 0º, −45º, −90º
      IF srL(θi) ≥ dmax THEN snL(θi) = dmax
      OR
      IF srL(θi) ≤ dmin THEN snL(θi) = dmin
      OR

   IF srL(θi) = NoReturn AND srL(θi)[t-1] < dmax
         THEN snL(θi) = srL(θi)[t-1] + Sdelta a
         UNLESS srL(θi)[t-1] + Sdelta > dmax
         IN WHICH CASE snL(θi) = dmax
   OR
   IF srL(θi) = NoReturn AND srL(θi)[t-1] = dmax
         THEN snL(θi) = dmax
END FOR
```

The current sensor values from the right-hand sensor array $srR(\theta_i)$ are processed in the same way to give the right-hand processed sensor values $snR(\theta_i)$, where $\theta$ = {0º, 45º, 90º}. Similarly, the process to obtain $snR(\theta_i)$ could be implemented on a software program following the instructions listed below:

```
FOR i = 0º, 45º, 90º
    IF srR(θi) ≥ dmax THEN snR(θi) = dmax
    OR
    IF srR(θi) ≤ dmin THEN snR(θi) = dmin
    OR
    IF srR(θi) = NoReturn AND srR(θi)[t-1] < dmax
        THEN snR(θi) = srR(θi)[t-1] + Sdelta a
        UNLESS srR(θi)[t-1] + Sdelta > dmax
        IN WHICH CASE snR(θi) = dmax
    OR
    IF srR(θi) = NoReturn AND srR(θi)[t-1] = dmax
        THEN snR(θi) = dmax
END FOR
```

After the left-hand and right-hand processed sensor values are calculated, $snL(\theta_i)$ and $snR(\theta_i)$, they are normalised with respect to the range $d_{min}$ to $d_{max}$. This normalization process maps the processed sensor values to the range [0, 1]: zero for values less than or equal to $d_{min}$, one for value greater than or equal to $d_{max}$, and linearly proportional value for all values in between.

A software program could be implemented to perform these tasks, where the code would be similar to the following instructions:

```
FOR _i = 0º, -45º, -90º
    snL(θi) = dmin ➔ snL(θi) = 0
    snL(θi) = dmax ➔ snL(θi) = 1
    dmin < snL(θi) < dmax
        ➔ (snL(θi) - dmin)/ (dmax - dmin)
END FOR
```

For the right sensor values, the instructions would be:

```
FOR _i = 0º, 45º, 90º
    snR(θi) = dmin ➔ snR(θi) = 0
    snR(θi) = dmax ➔ snR(θi) = 1
    dmin < snR(θi) < dmax
        ➔ (snR(θi) - dmin)/ (dmax - dmin)
END FOR
```

Once the normalised values of the left-hand and right-hand processed sensor values $snL(\theta_i)$ and $snR(\theta_i)$ are obtained, the following operations are carried out to obtain $ssL(\theta_i)$ and $ssR(\theta_i)$.

$$ssL(\theta_i) = snL(\theta_i) \cdot e^{-\frac{\theta_i^2}{\mu}},$$

where $1.500 \leq \mu \leq 5.000$

$$ssR(\theta_i) = snR(\theta_i) \cdot e^{-\frac{\theta_i^2}{\mu}},$$

where $1.500 \leq \mu \leq 5.000$

Accordingly, a possible code could be, for the left and right sensor values:

```
FOR _i = 0º, -45º, -90º
    ssL(θi) = snL(θi) · e^(-θi²/μ)
END FOR
FOR _i = 0º, 45º, 90º
    ssR(θi) = snR(θi) · e^(-θi²/μ)
END FOR
```

Where $1.500 \leq \mu \leq 5.000$

The results of this sensor data processing is a set of sonar sensor array values, $ssL(\theta_i)$ and $ssR(\theta_i)$, that are normalised and weighted according to the specified distribution.

This sensor data processing, represented in figure 2a, can be implemented as a program running in a microcontroller, with the code disclosed, or it could equally well be implemented directly in hardware, using FPGA, field-programmable gate array, technology, or any other easily programmed device, for example. Either the microcontroller or the FPGA will be included on the wheelchair controller.

From these data, two motion control parameters are derived, a surrounding free space linear component, $\alpha_s$, which is used to control the forward and backward speed of the wheelchair or the surrounding free space in a linear component, and a surrounding free space rotation component, $\beta_s$, which is used to control the rotation speed of the wheelchair or the surrounding free space in a rotational component.

The surrounding free space linear component, $\alpha_s$, value is calculated by summing all the $ssL(\theta_i)$ and $ssR(\theta_i)$ values and dividing the total by the number of sensors in the left and right arrays, six in our case. This action is represented in figure 2b. The instruction in this case, with three sensors on each wheelchair arm would be:

$$\alpha_s = \frac{ssL(-90°) + ssL(-45°) + ssL(0°) + ssR(0°) + ssR(45°) + ssR(90°)}{6}$$

In the case of the surrounding free space rotation component, $\beta_s$, value, this is divided into two semi-dimensions, a surrounding free space left rotation component, $\beta_{si}$, and a surrounding free space right rotation component, $\beta_{sr}$. The surrounding free space left rotation component, $\beta_{si}$, is calculated by summing the $ssL(\theta_i)$ values for the left sensor array, dividing the sum by the number of sensors in the left array, three in our case, subtracting the result from one and taking the absolute value of the result. The surrounding free space right rotation component, $\beta_{sr}$, value is calculated by summing

the ssR($\theta_i$) values for the right sensor array, dividing the sum by the number of sensors in the right array, three in our case, subtracting the result from one, and taking the absolute value of the result. All this process is depicted on figure 2c. The formula the calculate $\beta_{sr}$ and $\beta_{sl}$, thus, is:

$$\beta_{sl} = \left| 1 - \frac{ssL(0°) + ssL(-45°) + ssL(-90°)}{3} \right|$$

$$\beta_{sr} = \left| 1 - \frac{ssR(0°) + ssR(45°) + ssR(90°)}{3} \right|$$

Again, this sensor data processing can be implemented as a program running in the microcontroller, or it could equally well be implemented directly in hardware, using FPGA, field-programmable gate array, technology, or any other easily programmed device, for example. This routine will also run on the wheelchair controller.

The standard electric wheelchair joystick control outputs two analogue signals, usually $\pm$5V or $\pm$12V: one output corresponds to the forward and backward position of the joystick, +maxV for fully forward, -maxV for fully back, while the second output corresponds to the left and right position of the joystick, +maxV for fully right, and -maxV for fully left.

Both these joystick outputs are split into pairs of semi-dimensions, and scaled to range between 0 and +1: one pair for the forward and backward joystick movements, corresponding to the forward and backward motion of the wheelchair, and a second pair for the left and right joystick movements, corresponding to the turn left and turn right movements of the wheelchair.

The first pair of values is used to form a movement indicator means forward linear component value, $\alpha_{jsf}$, and a movement indicator means backward linear component value, $\alpha_{jsr}$, each having a range [0,+1].

The second pair of semi-dimension values is used to form a movement indicator means left rotation component value, $\beta_{jsi}$, and a movement indicator means right rotation component value, $\beta_{jsr}$, each having a range [0,+1].

The surrounding free space linear and rotation component values from the sonar sensor arrays, $\alpha_s$ and $\beta_s$, and the movement indicator means linear and rotation component values, $\alpha_{jsf}$ and $\beta_{jsl}$ and $\beta_{jsr}$ are then combined to form a total linear component value, $\alpha_T$, and a total rotation component value, $\beta_T$.

If the user decision is to move the wheelchair forward, the movement indicator means forward linear component, $\alpha_{jsf}$, is positive and the movement indicator means backward linear component, $\alpha_{jsr}$, is zero, the total linear component value, $\alpha_T$, is calculated as the harmonic mean value between the surrounding free space linear component value, $\alpha_s$, and the means forward linear component value, $\alpha_{jsf}$.

$$\alpha_T = \frac{2 \cdot \alpha_s \cdot \alpha_{jsf}}{\alpha_s + \alpha_{jsf}}$$

The total rotation component value, $\beta_T$, is calculated considering two components, a total left rotation component value, $\beta_{Tl}$, and total right rotation component value, $\beta_{Tr}$. Said parameters are calculated as the harmonic mean value between the user instructions and the sensor values, both in the right and left sense.

$$\beta_{Tl} = \frac{2 \cdot \beta_{sl} \cdot \beta_{jsl}}{\beta_{sl} + \beta_{jsl}}$$

$$\beta_{Tr} = \frac{2 \cdot \beta_{sr} \cdot \beta_{jsr}}{\beta_{sr} + \beta_{jsr}}$$

Once said total left and right rotation component values, $\beta_{Tl}$ and $\beta_{Tr}$, are calculated, they are compared in order to obtain the final total rotation component value, $\beta_T$. If the total left rotation component value, $\beta_{Tl}$, is greater than the total right rotation component value, $\beta_{Tr}$, the final movement must be to turn left, thus the final total rotation component value, $\beta_T$, will be equal to minus the total left rotation component value, $-\beta_{Tl}$. The minus sign indicates that the turn movement is to the left. If the total right rotation component value, $\beta_{Tr}$, is greater than the total left rotation component value, $\beta_{Tl}$, the final movement must be to turn right, thus the final total rotation component value, $\beta_T$, will be equal to plus the total right rotation component value, $+\beta_{Tr}$. The plus sign indicates that the turn movement is to the right.

If the user decision is to move the wheelchair backwards, the movement indicator means backward linear component value, $\alpha_{jsr}$, is positive and the movement indicator means forward linear component value, $\alpha_{jsf}$, is zero, the total linear component value, $\alpha_T$, is set to a constant value, a slow constant reverse speed. Said speed is a value safe for the wheelchair to operate without causing any risk for the user and the persons and objects surrounding the wheelchair.

The final total rotation component value, $\beta_T$, is calculated using the same procedure used in the forward movement, but considering that the wheelchair is moving backwards. A total left rotation component and total right rotation component values, $\beta_{Tl}$ and a $\beta_{Tr}$, will be calculated and compared. If the total left rotation component value, $\beta_{Tl}$, is greater than the total right rotation component value, $\beta_{Tr}$, the total rotation component value, $\beta_T$, will be equal to minus the total right rotation component value, $-\beta_{Tr}$. If the total right rotation component value, $\beta_{Tr}$, is greater than the total left rotation component value, $\beta_{Tl}$, the total rotation component value, $\beta_T$, will be equal to plus the total left rotation component value, $+\beta_{Tl}$.

In both forward and backwards calculation, if the total left rotation component value, $\beta_{Tl}$, is equal to the total right rotation component value, $\beta_{Tr,}$ the total rotation component value, $\beta_T$, will be equal to zero and no turn will be performed.

The total linear component value, $\alpha_T$, is then used to set the forward speed of the wheelchair, where a total linear component value, $\alpha_T$, equal to 1 corresponds to the maximum forward speed of the wheelchair, and a total linear component value, $\alpha_T$, equal to 0 corresponds to zero forward speed, or the negative slow constant reverse speed, in the case of the movement indicator means backward linear component value, $\alpha_{jsr}$, being greater than zero.

The total rotation component value, $\beta_T$, is used to set the rotation speed of the wheelchair, where a total rotation component value, $\beta_T$, equal to -1 corresponds to full speed rotation round to the left, a total rotation component value, $\beta_T$, equal to +1 corresponds to full speed rotation round to the right, and a total rotation component value, $\beta_T$, equal to 0 corresponds to no rotation.

Again, these linear and rotation component calculations can be implemented as a program running in the microcontroller, or it could equally well be implemented directly in hardware, using FPGA, field-programmable gate array, technology, or any other easily programmed device, for example.

For better wheelchair driving, the output signals of the user control device, the joystick, for example, is best restricted so that it is not possible to command a maximum forward speed and a maximum rotate speed at the same time. This is most easily done by mapping the rectangular bounding box of the joystick movements onto a circle with a radius equal to the maximum forward movement.

If infrared sensors are used instead of ultra-sound sensors, the sensor data processing is identical, except that the $S_{delta}$ processing step is not needed.

If infrared sensors are used in addition to ultra-sound sensors, then the infrared sensor data is processed in the same way, except for the $S_{delta}$ calculation, but separately from the ultra-sound sensor data to produce surrounding free space forward and backward linear component according to an infrared sensor values, $\alpha_{irf}$ and $\alpha_{irr}$, and surrounding free space left and right rotation component according to an infrared sensor values, $\beta_{irl}$ and $\beta_{irr}$. These additional surrounding free space values are combined with the joystick and ultra-sound sensor linear and rotation component values in the same way by extending the harmonic mean calculation used to include three terms instead of two terms. The expression for the total linear component value, $\alpha_T$, is, for this situation with three parameters:

$$\alpha_T = \frac{3 \cdot \alpha_s \cdot \alpha_{jsf} \cdot \alpha_{irrf}}{\alpha_{jsf} \cdot \alpha_{irrf} + \alpha_s \cdot \alpha_{irrf} + \alpha_s \cdot \alpha_{jsf}}$$

Alternatively, a mean value of the surrounding free space according to the ultrasound and infrared sensor may be obtained and then calculate the harmonic mean of said mean and the movement indicator means value. The result if the arithmetic mean is performed first and the harmonic mean second is:

$$\alpha_T = \frac{2 \cdot \alpha_{jsf} \cdot (\alpha_s + \alpha_{irrf})}{2 \cdot \alpha_{jsf} + \alpha_s + \alpha_{irrf}}$$

If in both cases the harmonic mean is performed, the final result is:

$$\alpha_T = \frac{4 \cdot \alpha_s \cdot \alpha_{jsf} \cdot \alpha_{irrf}}{\alpha_{jsf} \cdot \alpha_{irrf} + 2 \cdot \alpha_s \cdot \alpha_{irrf} + \alpha_s \cdot \alpha_{jsf}}$$

The corresponding formulae for the rest of parameters will change on an analogous manner.

In the same way, any number of other linear and rotation component values derived from other sensor systems, laser, radar, vision, etc., can be easily and simply combined to form unique total linear and rotation component values, $\alpha_T$ and $\beta_T$, that are then used to control the forward and rotation speed of the wheelchair.

The user control interface design needed for an electric wheelchair user will depend upon the abilities and capacities of the human user involved. Nonetheless, only a few inputs are needed to generate the total linear and rotation component values, $\alpha_T$ and $\beta_T$, for driving and navigating a wheelchair, given the sensor-based motion control system described above.

For example, instead of the joystick device considered up to now, a Five Button Cross device could be used, where the five buttons have binary states: on or off, pressed on not-pressed. Said device is shown in figure 3.

Pressing once, and releasing, the top button, "F", increments up the movement indicator means forward linear component value, $\alpha_{js}$, thus increasing the forward speed of the wheelchair. Pressing once the middle "X" button, sets the movement indicator means linear component value, $\alpha_{js}$, to zero, and so stops the wheelchair, since if any linear component value, from the movement indicator means and/or the sensor system is zero, the total linear component value, $\alpha_T$, will be zero. This is a useful property of the harmonic mean combination rule described above.

Pressing once the bottom button, "B", increments down the movement indicator means forward linear component value, $\alpha_{jsf}$, thus decreasing the forward speed of the wheelchair, when it is currently moving forward. Or, if the wheelchair is currently stopped, it starts a low fixed speed backwards motion. Pressing once the middle "X" button, again, sets the movement indicator means linear component value, $\alpha_{js}$, to zero, thus stopping the wheelchair moving backwards.

Pressing, and holding, the left button, "L", generates a fixed movement indicator means left rotation component signal. This will start the wheelchair turning left, if the sensor system allows a left turn. Releasing the "L" button, sets the movement indicator means left rotation component signal to zero.

Similarly, pressing, and holding, the right button, "R", generates a fixed movement indicator means right rotation component signal. This will start the wheelchair turning to the right, if the sensor system allows a right turn. Releasing the "R" button sets the movement indicator means right rotation component signal to zero.

This five button cross control interface may easily allow other special control modes. For example, pressing and holding the middle "X" and then pressing the "F" button, could be a way to command forward movement, at a speed completely determined by the sensor system, but with no rotation, right or left: a drive straight ahead command.

Releasing the "X" button returns the control to the standard mode, with sensor system and user rotation commands active. Similarly, pressing and holding the "X" button and then pressing the "B" button could be a way of commanding a straight back motion, which is stopped on releasing the "X" button.

Another possibility is to press and holding the "X" button with either the "L" button or the "R" button, could be a way of commanding complete user control of rotation motion, to the left, with the "L" button, or to the right, with the "R" button.

The modifications needed to add this invention to a standard electric wheelchair are both straightforward and low cost.

The result is an electric wheelchair that still needs the user to be actively involved in guiding the motion of his or her wheelchair, but which is made easier to drive in situations requiring fine detailed wheelchair motions to pass restricted or cluttered spaces, and which will significantly reduce the possibility of the user driving into things, including other people. The wheelchair of the present invention can thus significantly improve the safety of wheelchair users when driving in spaces and places occupied by other non-wheelchair using people, especially in situations where the other people may not be able to easily and quickly get out of the way of a poorly driven electric wheelchair.

## Claims

1. Wheelchair that comprises a propulsion means for at least two drive wheels (1), a wheelchair user movement indicator means (2) that comprises means to indicate a forward movement, a backward movement and a rotation movement, at least one set of sensors to detect at least one value referring to a surrounding free space around the wheelchair, and a controller,

wherein said controller comprises means to obtain a linear movement component value ($\alpha_{js}$) and a rotation movement component value ($\beta_{js}$) from the data produced by the movement indicator means, and means to obtain a surrounding free space value in a linear component ($\alpha_s$) for each set of sensors and a surrounding free space value in a rotational component ($\beta_s$) for each set of sensors,
**characterised in that** the controller additionally comprises means to combine the linear movement component value ($\alpha_{js}$) obtained from the movement indicator means and the surrounding free space value in a linear component ($\alpha_s$) of each set of sensors to produce a total linear movement ($\alpha_T$) and to combine the rotation movement component value ($\beta_{js}$) obtained from the movement indicator means and the surrounding free space value in a rotational component ($\beta_s$) of each set of sensors to produce a total rotational movement ($\beta_T$), and
**in that** the propulsion means are configured to drive the drive wheels according to the total linear movement ($\alpha_T$) and the total rotational movement ($\beta_T$) produced.

**2.** Wheelchair according to claim 1, **characterised in that** the means to combine the linear movement component value ($\alpha_{js}$) obtained from the movement indicator means and the surrounding free space value in a linear component ($\alpha_s$) of each set of sensors to produce a total linear movement ($\alpha_T$) and to combine the rotation movement component value ($\beta_{js}$) obtained from the movement indicator means and the surrounding free space value in a rotational component ($\beta_s$) of each set of sensors to produce a total rotational movement ($\beta_T$) are configured to calculate the harmonic mean of the linear movement component value ($\alpha_{js}$) obtained from the movement indicator means and the surrounding free space value in a linear component ($\alpha_s$) of each set of sensors, being said harmonic mean the total linear movement ($\alpha_T$) and to calculate the harmonic mean of the rotation movement component value ($\beta_{js}$) obtained from movement indicator means and the surrounding free space value in a rotational component ($\beta_s$) of each set of sensors, being said harmonic mean the total rotational movement ($\beta_T$).

**3.** Wheelchair according to any of claims 1-2, **characterised in that** the means to combine the linear movement component value ($\alpha_{js}$) obtained from the movement indicator means and the surrounding free space value in a linear component ($\alpha_s$) of each set of sensors to produce a total linear movement ($\alpha_T$) and to combine the rotation movement component value ($\beta_{js}$) obtained from the movement indicator means and the surrounding free space value in a rotational component ($\beta_s$) of each set of sensors to produce a total rotational movement ($\beta_T$) consist on a microcontroller.

**4.** Wheelchair according to any of claims 1-2, **characterised in that** the means to combine the linear movement component value ($\alpha_{js}$) obtained from the movement indicator means and the surrounding free space value in a linear component ($\alpha_s$) of each set of sensors to produce a total linear movement ($\alpha_T$) and to combine the rotation movement component value ($\beta_{js}$) obtained from the movement indicator means and the surrounding free space value in a rotational component ($\beta_s$) of each set of sensors to produce a total rotational movement ($\beta_T$) consist on a field-programmable gate array device.

**5.** Wheelchair according to any of claims 1-4, **characterised in that** the set of sensors comprises at least three sensors (3, 4, 5), a first sensor (3) is arranged at the front of the wheelchair, oriented to the forward direction, a last sensor (5) is placed at 90 degrees from the forward movement direction, out of the wheelchair forward direction, and the rest of the sensors (4) are evenly distributed between the first and the last sensor.

**6.** Wheelchair according to any of claims 1-5, **characterised in that** the technology of the set of sensors is selected from ultra-sound, infra-red, sonar, scanning laser range finders, radar, and artificial vision systems.

**7.** Method to correct a wheelchair driving that comprises the steps,

- acquiring a wheelchair user movement indication,
- obtaining a linear movement component ($\alpha_{js}$) and a rotation movement component ($\beta_{js}$) of the wheelchair user movement indication,
- acquiring at least one set of values of the surrounding free space around the wheelchair,
- obtaining a linear component ($\alpha_s$) and a rotation component ($\beta_s$) of the, at least one, set of values of the surrounding free space around the wheelchair,

**characterised in that** the process further comprises the steps,
- combining the linear movement component ($\alpha_{js}$) of the wheelchair user movement indication and the linear component ($\alpha_s$) of the, at least one, set of values of the surrounding free space around the wheelchair to obtain a total linear movement ($\alpha_T$),
- combining the rotation movement component ($\beta_{js}$) of the wheelchair user movement indication and the rotation

component ($\beta_s$) of the, at least one, set of values of the surrounding free space around the wheelchair to obtain a total rotation movement ($\beta_T$),
- driving the wheelchair according to the total linear movement ($\alpha_T$) and the total rotational movement ($\beta_T$) obtained.

**8.** Method according to claim 7, **characterised in that** the combination of the linear movement component ($\alpha_{js}$) of the wheelchair user movement indication and the linear component ($\alpha_s$) of the, at least one, set of values of the surrounding free space around the wheelchair to obtain a total linear movement ($\alpha_T$) is made calculating the harmonic mean of said linear movement component ($\alpha_{js}$) of the wheelchair user movement indication and said linear component ($\alpha_s$) of the, at least one, set of values of the surrounding free space around the wheelchair.

**9.** Method according to claim 7, **characterised in that** the combination of the rotational movement component ($\beta_{js}$) of the wheelchair user movement indication and the rotational component ($\beta_s$) of the, at least one, set of values of the surrounding free space around the wheelchair to obtain a total rotational movement ($\beta_T$) is made calculating the harmonic mean of said rotational movement component ($\beta_{js}$) of the wheelchair user movement indication and said rotational component ($\beta_s$) of the, at least one, set of values of the surrounding free space around the wheelchair.

## Patentansprüche

**1.** Rollstuhl, der ein Antriebsmittel für mindestens zwei Antriebsräder (1) aufweist, ein Rollstuhlbenutzerindikatormittel, das Mittel aufweist, um eine Vorwärtsbewegung, eine Rückwärtsbewegung und eine Drehbewegung anzuzeigen, mindestens einen Satz von Sensoren zum Erfassen mindestens eines Werts, der sich auf einen Umgebungsfreiraum um den Rollstuhl bezieht, und eine Steuerung,
wobei die Steuerung Mittel aufweist, um einen linearen Bewegungskomponentenwert ($\alpha_{js}$) und einen Drehbewegungskomponentenwert ($\beta_{js}$) aus den Daten zu erzielen, die von den Bewegungsindikatormitteln erzeugt werden, und Mittel zum Erzielen eines Umgebungsfreiraumwerts in einer linearen Komponente ($\alpha_s$) für jeden Satz von Sensoren, und eines Umgebungsfreiraumwerts in einer Drehkomponente ($\beta_s$) für jeden Satz von Sensoren,
**dadurch gekennzeichnet, dass** die Steuerung zusätzlich Mittel aufweist, um den linearen Bewegungskomponentenwert ($\alpha_{js}$), der aus den Bewegungsindikatormitteln und dem Umgebungsfreiraumwert in einer linearen Komponente ($\alpha_s$) jedes Satzes von Sensoren erzielt wird, zu kombinieren, um eine lineare Gesamtbewegung ($\alpha_T$) zu erzeugen und den Drehbewegungskomponentenwert ($\beta_{js}$), der aus den Bewegungsindikatormitteln und dem Umgebungsfreiraumwert in einer Drehkomponente ($\beta_s$) jedes Satzes von Sensoren erzielt wird, zu kombinieren, um eine Gesamtdrehbewegung ($\beta_T$) zu erzeugen, und
**dadurch**, dass die Antriebsmittel konfiguriert sind, um die Antriebsräder gemäß der erzeugten Gesamtlinearbewegung ($\alpha_T$) und der erzeugten Gesamtdrehbewegung ($\beta_T$) anzutreiben.

**2.** Rollstuhl nach Anspruch 1, **dadurch gekennzeichnet, dass** die Mittel zum Kombinieren des linearen Bewegungskomponentenwerts (as), der aus den Bewegungsindikatormitteln und dem Umgebungsfreiraumwert in einer linearen Komponente ($\alpha_s$) jedes Satzes von Sensoren erzielt wird, um eine lineare Gesamtbewegung ($\alpha_T$) zu erzeugen, und zum Kombinieren des Drehbewegungskomponentenwerts ($\beta_{js}$), der von den Bewegungsindikatormitteln und dem Umgebungsfreiraumwert in einer Drehkomponente ($\beta_s$) jedes Satzes von Sensoren erzielt wird, um eine Gesamtdrehbewegung ($\beta_T$) zu erzeugen, konfiguriert sind, um den harmonischen Mittelwert des linearen Bewegungskomponentenwerts ($\alpha_{js}$) zu berechnen, der von den Bewegungsindikatormitteln und dem Umgebungsfreiraumwert in einer linearen Komponente ($\alpha_s$) jedes Satzes von Sensoren erzielt wird, der harmonische Mittelwert der Gesamtlinearbewegung ($\alpha_T$) ist, und zum Berechnen des harmonischen Mittelwerts des Drehbewegungskomponentenwerts ($\beta_{js}$), der aus den Bewegungsindikatormitteln und dem Umgebungsfreiraumwert in einer Drehkomponente ($\beta_s$) jedes Satzes von Sensoren erzielt wird, der harmonische Mittelwert der Gesamtdrehbewegung ($\beta_T$) ist.

**3.** Rollstuhl nach einem der Ansprüche 1-2, **dadurch gekennzeichnet, dass** die Mittel zum Kombinieren des linearen Bewegungskomponentenwerts (as), die aus den Bewegungsindikatormitteln und dem Umgebungsfreiraumwert in einer linearen Komponente ($\alpha_s$) jedes Satzes von Sensoren erzielt werden, um eine Gesamtlinearbewegung ($\alpha_T$) zu erzeugen, und zum Kombinieren des Drehbewegungskomponentenwerts ($\beta_{js}$), der aus den Bewegungsindikatormitteln und dem Umgebungsfreiraumwert in einer Drehkomponente ($\beta_s$) jedes Satzes von Sensoren erzielt wird, um eine Gesamtdrehbewegung ($\beta_T$) zu erzielen, einen Mikrocontroller umfassen.

**4.** Rollstuhl nach einem der Ansprüche 1-2, **dadurch gekennzeichnet, dass** die Mittel zum Kombinieren des linearen Bewegungskomponentenwerts (as), der aus den Bewegungsindikatormitteln und dem Umgebungsfreiraumwert in

einer linearen Komponente ($\alpha_s$) jedes Satzes von Sensoren erzielt wird, um eine Gesamtlinearbewegung ($\alpha$T) zu erzeugen, und zum Kombinieren des Drehbewegungskomponentenwerts ($\beta_{js}$), der aus den Bewegungsindikatormitteln und dem Bewegungsfreiraumwert in einer Drehkomponente ($\beta_s$) jedes Satzes von Sensoren erzielt wird, um eine Gesamtdrehbewegung ($\beta_T$) zu erzeugen, einen Field-Programmable-Gate-Array umfassen.

**5.** Rollstuhl nach einem der Ansprüche 1-4, **dadurch gekennzeichnet, dass** der Satz von Sensoren mindestens drei Sensoren (3, 4, 5) aufweist, wobei ein erster Sensor (3) auf der Vorderseite des Rollstuhls nach vorn ausgerichtet angeordnet ist, ein letzter Sensor (5) zu 90° von der Vorwärtsbewegungsrichtung platziert ist, aus der Vorwärtsrichtung des Rollstuhls heraus, und der Rest der Sensoren (4) gleichmäßig zwischen dem ersten und dem letzten Sensor verteilt ist.

**6.** Rollstuhl nach einem der Ansprüche 1-5, **dadurch gekennzeichnet, dass** die Technik des Sensorensatzes ausgewählt wird aus Ultraschall, Infrarot, Sonar, Scan-Laserentfernungsmesser, Radar und künstliche Visionssysteme.

**7.** Verfahren zum Korrigieren eines Rollstuhlfahrens, das folgende Schritte aufweist,

- Erfassen eines Rollstuhlbenutzerbewegungsindikators,
- Erzielen einer linearen Bewegungskomponente ($\alpha_{js}$) und einer Drehbewegungskomponente ($\beta_{js}$) des Rollstuhlbenutzerbewegungsindikators,
- Erfassen mindestens eines Satzes von Werten des Umgebungsfreiraums um den Rollstuhl,
- Erzielen einer linearen Komponente ($\alpha_s$) und einer Drehkomponente ($\beta_s$) des mindestens einen Satzes von Werten des Umgebungsfreiraums um den Rollstuhl,

**dadurch gekennzeichnet, dass** der Prozess ferner die folgenden Schritte aufweist,

- Kombinieren der linearen Bewegungskomponente ($\alpha_{js}$) des Rollstuhlbenutzerbewegungsindikators und der linearen Komponente ($\alpha_s$) des mindestens einen Satzes von Werten des Umgebungsfreiraums um den Rollstuhl, um eine Gesamtlinearbewegung ($\alpha_T$) zu erzielen,
- Kombinieren der Drehbewegungskomponente ($\beta_{js}$) des Rollstuhlbenutzerbewegungsindikators und der Drehkomponente ($\beta_s$) des mindestens einen Satzes von Werten des Umgebungsfreiraums um den Rollstuhl, um eine Gesamtdrehbewegung ($\beta_T$) zu erzielen,
- Antreiben des Rollstuhls gemäß der erzielten Gesamtlinearbewegung ($\alpha_T$) und der erzielten Gesamtdrehbewegung ($\beta_T$).

**8.** Verfahren nach Anspruch 7, **dadurch gekennzeichnet, dass** die Kombination der linearen Bewegungskomponente ($\alpha_{js}$) des Rollstuhlbenutzerbewegungsindikators und der linearen Komponente ($\alpha_s$) des mindestens einen Satzes von Werten des Umgebungsfreiraums um den Rollstuhl, um eine Gesamtlinearbewegung ($\alpha_T$) zu erzielen, durch Berechnen des harmonischen Mittelwertes der linearen Bewegungskomponente ($\alpha_{js}$) des Rollstuhlbenutzerbewegungsindikators und der linearen Komponente ($\alpha_s$) des mindestens einen Satzes von Werten des Umgebungsfreiraums um den Rollstuhl erfolgt.

**9.** Verfahren nach Anspruch 7, **dadurch gekennzeichnet, dass** die Kombination der Drehbewegungskomponente ($\beta_{js}$) des Rollstuhlbenutzerbewegungsindikators und der Drehkomponente ($\beta_s$) des mindestens einen Satzes von Werten des Umgebungsfreiraums um den Rollstuhl zum Erzielen einer Gesamtdrehbewegung ($\beta_T$) durch Berechnen des harmonischen Mittelwertes der Drehbewegungskomponente ($\beta_{js}$) des Rollstuhlbenutzerbewegungsindikators und der Drehkomponente ($\beta_s$) des mindestens einen Satzes von Werten des Umgebungsfreiraums um den Rollstuhl erfolgt.

## Revendications

**1.** Fauteuil roulant, comprenant des moyens de propulsion pour au moins deux roues d'entraînement (1), des moyens indicateurs de mouvement à l'utilisateur du fauteuil roulant (2), qui comprennent des moyens pour indiquer un mouvement en avant, un mouvement en arrière et un mouvement de rotation, au moins un jeu de capteurs pour détecter au moins une valeur se référant à un espace libre environnant autour du fauteuil roulant, et un contrôleur, dans lequel ledit contrôleur comprend des moyens pour obtenir une valeur de composante de mouvement linéaire ($\alpha_{js}$) et une valeur de composante de mouvement de rotation ($\beta_{js}$) à partir des données produites par les moyens indicateurs de mouvement, et des moyens pour obtenir une valeur de l'espace libre environnant dans une composante linéaire ($\alpha_s$) pour chaque jeu de capteurs et une valeur de l'espace libre environnant dans une composante rotative ($\beta_s$), pour chaque jeu de capteurs,

**caractérisé en ce que** le contrôleur comprend en plus des moyens pour combiner la valeur de composante de mouvement linéaire ($\alpha_{js}$), obtenue à partir des moyens indicateurs de mouvement, et la valeur de l'espace libre environnant dans une composante linéaire ($\alpha_s$) de chaque jeu de capteurs, pour produire un mouvement total linéaire ($\alpha_T$), et pour combiner la valeur de composante de mouvement de rotation ($\beta_{js}$), obtenue à partir des moyens indicateurs de mouvement, et la valeur de l'espace libre environnant dans une composante rotative ($\beta_s$) de chaque jeu de capteurs, pour produire un mouvement total rotatif ($\beta_T$), et
**en ce que** les moyens de propulsion sont configurés pour entraîner les roues motrices selon le mouvement total linéaire ($\alpha_T$) et le mouvement total rotatif ($\beta_T$) produits.

**2.** Fauteuil roulant selon la revendication 1, **caractérisé en ce que** les moyens pour combiner la valeur de composante de mouvement linéaire ($\alpha_{js}$), obtenue à partir des moyens indicateurs de mouvement, et la valeur de l'espace libre environnant dans une composante linéaire ($\alpha_s$) de chaque jeu de capteurs, pour produire un mouvement total linéaire ($\alpha_T$), et pour combiner la valeur de composante de mouvement de rotation ($\beta_{js}$), obtenue à partir des moyens indicateurs de mouvement, et la valeur de l'espace libre environnant dans une composante rotative ($\beta_s$) de chaque jeu de capteurs, pour produire un mouvement total rotatif ($\beta_T$), sont configurés pour calculer la moyenne harmonique de la valeur de composante de mouvement linéaire ($\alpha_{js}$), obtenue à partir des moyens indicateurs de mouvement, et la valeur de l'espace libre environnant dans une composante linéaire ($\alpha_s$) de chaque jeu de capteurs, ladite moyenne harmonique étant le mouvement total linéaire ($\alpha_T$), et pour calculer la moyenne harmonique de la valeur de composante de mouvement de rotation ($\beta_{js}$), obtenue à partir des moyens indicateurs de mouvement, et de l'espace libre environnant dans une composante rotative ($\beta_s$) de chaque jeu de capteurs, ladite moyenne harmonique étant le mouvement total rotatif ($\beta_T$).

**3.** fauteuil roulant selon l'une quelconque des revendications 1 à 2, **caractérisé en ce que** les moyens pour combiner la valeur de composante de mouvement linéaire ($\alpha_{js}$), obtenue à partir des moyens indicateurs de mouvement, et la valeur de l'espace libre environnant dans une composante linéaire ($\alpha_S$) de chaque jeu de capteurs, pour produire un mouvement total linéaire ($\alpha_T$), et pour combiner la valeur de composante de mouvement de rotation ($\beta_{js}$), obtenue à partir des moyens indicateurs de mouvement, et la valeur de l'espace libre environnant dans une composante rotative ($\beta_S$) de chaque jeu de capteurs, pour produire un mouvement total rotatif ($\beta_T$), sont constitués d'un microcontrôleur.

**4.** Fauteuil roulant selon l'une quelconque des revendications 1 à 2, **caractérisé en ce que** les moyens pour combiner la valeur de composante de mouvement linéaire ($\alpha_{js}$), obtenue à partir des moyens indicateurs de mouvement, et la valeur de l'espace libre environnant dans une composante linéaire ($\alpha_S$) de chaque jeu de capteurs, pour produire un mouvement total linéaire ($\alpha_T$), et pour combiner la valeur de composante de mouvement de rotation ($\beta_{js}$), obtenue à partir des moyens indicateurs de mouvement, et la valeur de l'espace libre environnant dans une composante rotative ($\beta_S$) de chaque jeu de capteurs, pour produire un mouvement total rotatif ($\beta_T$), sont constitués d'un dispositif de réseau programmable de portes.

**5.** Fauteuil roulant selon l'une quelconque des revendications 1 à 4, **caractérisé en ce que** le jeu de capteurs comprend au moins trois capteurs (3, 4, 5), un premier capteur (3) est agencé à l'avant du fauteuil roulant, orienté dans la direction avant, un dernier capteur (5) est placé à 90 degrés de la direction de mouvement avant, hors de la direction avant du fauteuil roulant, et le reste des capteurs (4) sont répartis uniformément entre le premier et le dernier capteur.

**6.** Fauteuil roulant selon l'une quelconque des revendications 1 à 5, **caractérisé en ce que** la technologie du jeu de capteurs est sélectionnée parmi les détecteurs à ultra-sons, infra-rouge, sonar, à télémètre à laser à balayage, radar et systèmes de vision artificielle.

**7.** Procédé pour corriger l'entraînement d'un fauteuil roulant, comprenant les étapes consistant à :

- acquérir une indication de mouvement de l'utilisateur d'un fauteuil roulant,
- obtenir une composante de mouvement linéaire ($\alpha_{js}$) et une composante de mouvement de rotation ($\beta_{js}$) de l'indication de mouvement de l'utilisateur du fauteuil roulant,
- acquérir au moins un jeu de valeurs de l'espace libre environnant autour du fauteuil roulant,
- obtenir une composante linéaire ($\alpha_S$) et une composante rotative ($\beta_S$) du au moins un jeu de valeurs de l'espace libre environnant autour du fauteuil roulant, **caractérisé en ce que** la méthode comprend en outre les étapes consistant à :
- combiner la composante de mouvement linéaire ($\alpha_{js}$) de l'indication de mouvement de l'utilisateur du fauteuil roulant et la composante linéaire ($\alpha_S$) du au moins un jeu de valeurs de l'espace libre environnant autour du fauteuil roulant, pour obtenir un mouvement total linéaire ($\alpha_T$),
- combiner la composante de mouvement de rotation ($\beta_{js}$) de l'indication de mouvement de l'utilisateur du fauteuil roulant et la composante de rotation ($\beta_S$) du au moins un jeu de valeurs de l'espace libre environnant autour du fauteuil roulant, pour obtenir un mouvement total rotatif ($\beta_T$),
- entraîner le fauteuil roulant selon le mouvement total linéaire ($\alpha_T$) et le mouvement total rotatif ($\beta_T$) obtenus.

**8.** Procédé selon la revendication 7, **caractérisé en ce que** la combinaison de la composante de mouvement linéaire ($\alpha_{js}$) de l'indication de mouvement de l'utilisateur du fauteuil roulant et de la composante linéaire ($\alpha_S$) du au moins un jeu de valeurs de l'espace libre environnant autour du fauteuil roulant pour obtenir un mouvement total linéaire ($\alpha_T$) est obtenue en calculant la moyenne harmonique de ladite composante de mouvement linéaire ($\alpha_{js}$) de l'indication de mouvement de l'utilisateur de u fauteuil roulant et de ladite composante linéaire ($\alpha_S$) du au moins un jeu de valeurs de l'espace libre environnant autour du fauteuil roulant.

**9.** Procédé selon la revendication 7, **caractérisé en ce que** la combinaison de la composante de mouvement rotatif ($\beta_{js}$) de l'indication de mouvement de l'utilisateur du fauteuil roulant et de la composante rotative ($\beta_S$) du au moins un jeu de valeurs de l'espace libre environnant autour du fauteuil roulant pour obtenir un mouvement total rotatif ($\beta_T$) est réalisée en calculant la moyenne harmonique de ladite composante de mouvement rotatif ($\beta_{js}$) de l'indication de mouvement de l'utilisateur du fauteuil roulant et de ladite composante rotative ($\beta_S$) du au moins un jeu de valeurs de l'espace libre environnant autour du fauteuil roulant.

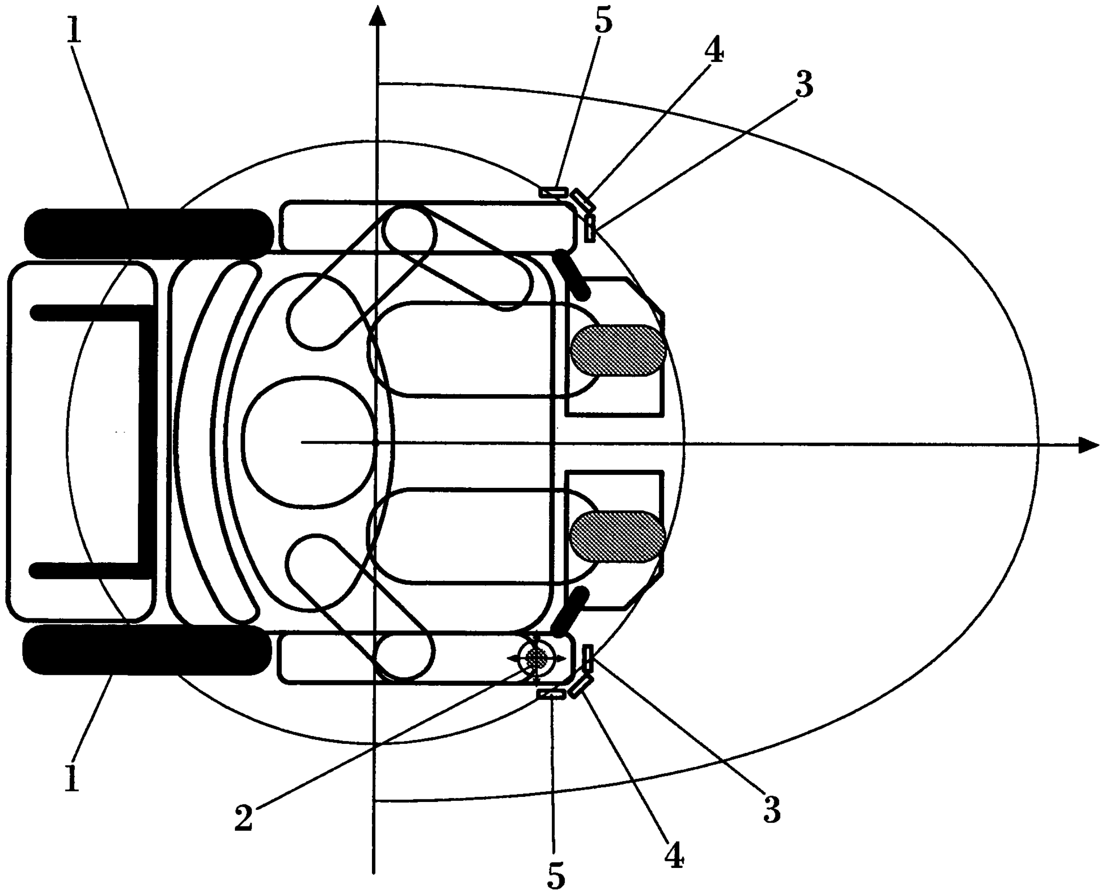


FIG. 1

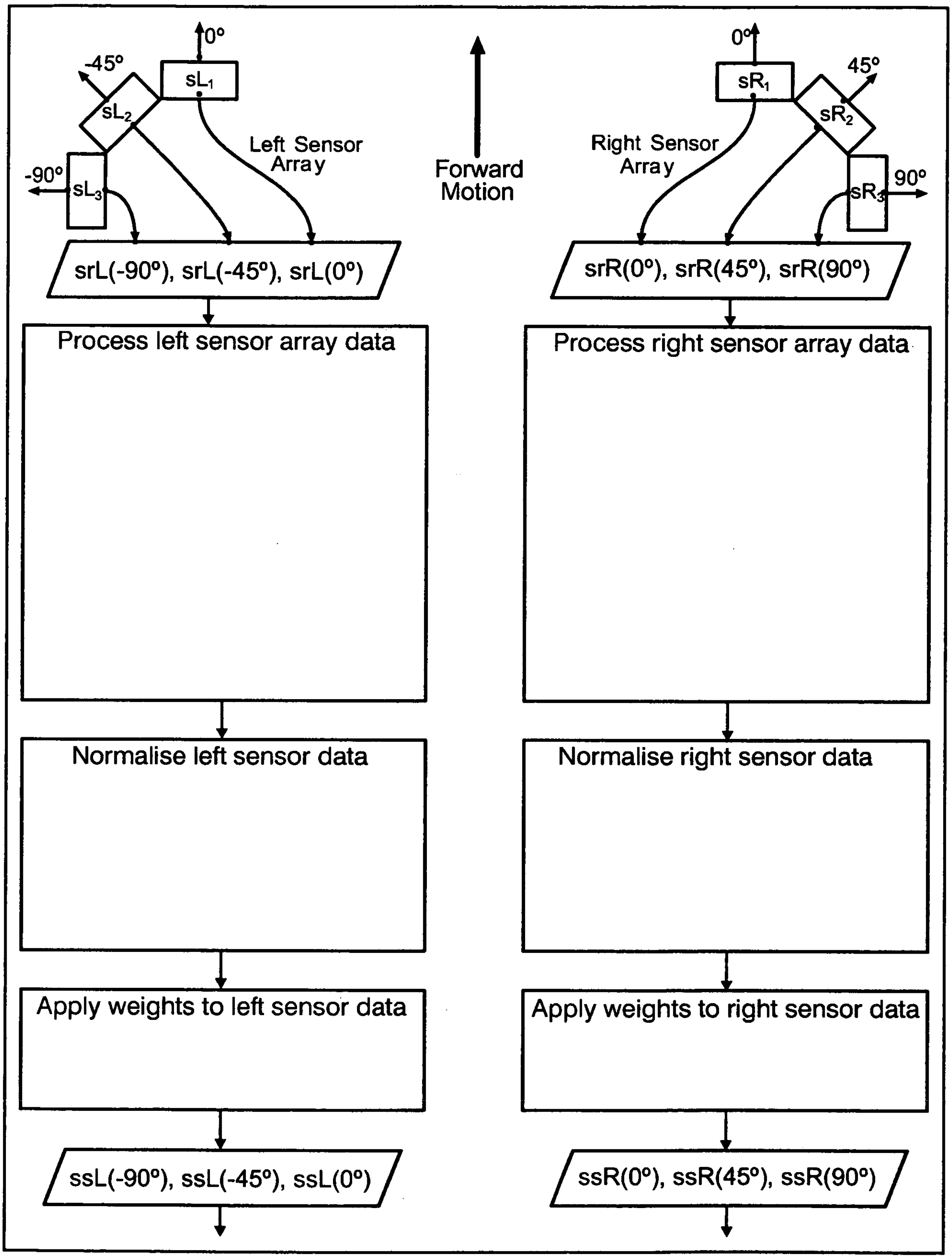
0°
-45°
sL1
sL2
-90°
sL3
Left Sensor Array
Forward Motion
0°
45°
sR1
sR2
Right Sensor Array
90°
sR3
srL(-90°), srL(-45°), srL(0°)
srR(0°), srR(45°), srR(90°)
Process left sensor array data
Process right sensor array data
Normalise left sensor data
Normalise right sensor data
Apply weights to left sensor data
Apply weights to right sensor data
ssL(-90°), ssL(-45°), ssL(0°)
ssR(0°), ssR(45°), ssR(90°)

FIG. 2a

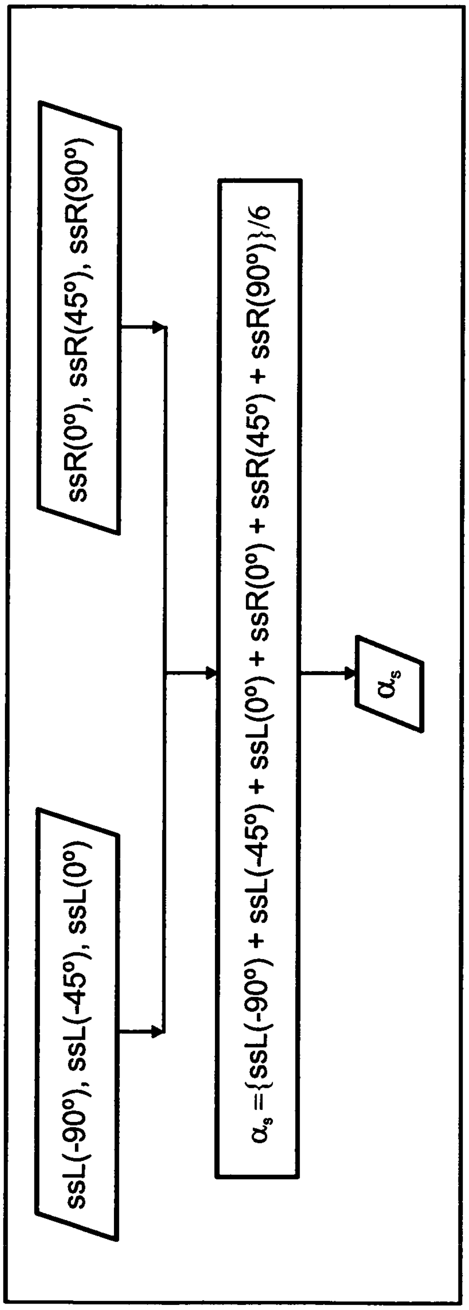
ssL(-90º), ssL(-45º), ssL(0º)
ssR(0º), ssR(45º), ssR(90º)
$\alpha_s$ ={ssL(-90º) + ssL(-45º) + ssL(0º) + ssR(0º) + ssR(45º) + ssR(90º)}/6
$\alpha_s$

FIG. 2b

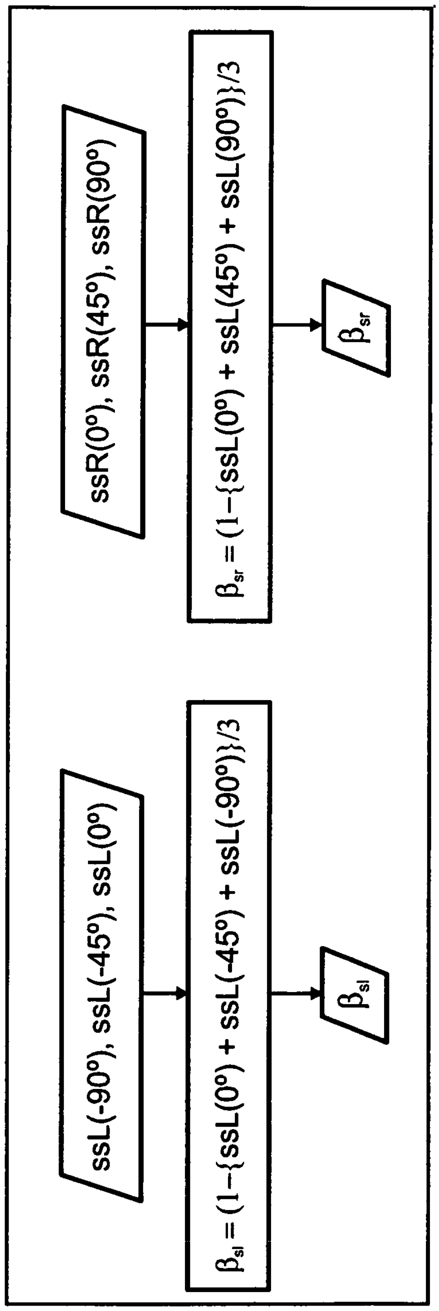
ssL(-90º), ssL(-45º), ssL(0º)
ssR(0º), ssR(45º), ssR(90º)
$\beta_{sl}$ = (1−{ssL(0º) + ssL(-45º) + ssL(-90º)}/3
$\beta_{sr}$ = (1−{ssL(0º) + ssL(45º) + ssL(90º)}/3
$\beta_{sl}$
$\beta_{sr}$

FIG. 2c

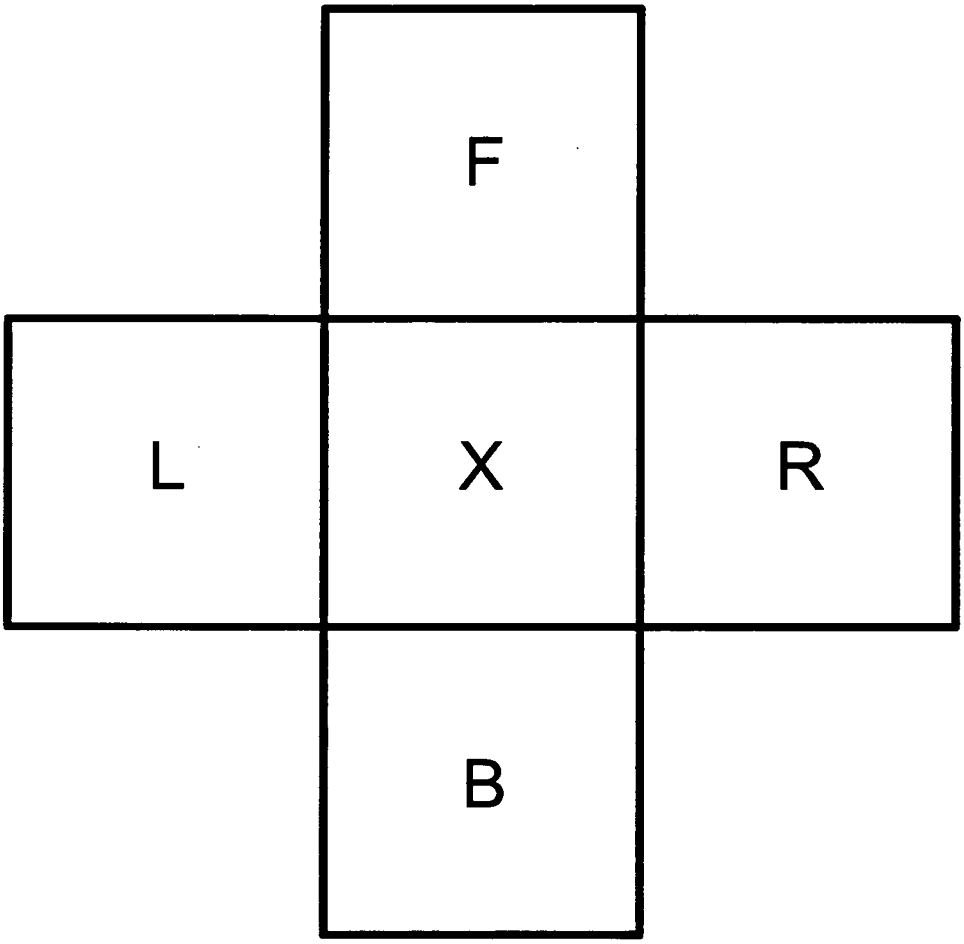


FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5006988 A
- FR 2660454
- US 20040220735 A
- US 20060180368 A
- JP 11290390 B
- US 7204328 B


### Non-patent literature cited in the description


- **Moravec, H ; Elfes, A.** High resolution maps from wide angle sonar. *Proc ASME International Computers in Engineering Conference,* 1985, 375-80
- **Borenstein, J ; Koren, Y.** The vector field histogram--fast obstacle avoidance for mobile robots. *IEEE Transactions on Robotics and Automation,* June 1991, vol. 7 (3), 278-88
- **Arkin, R C.** Behaviour-based Robotics. MIT Press, 1998
- **Brooks, R A.** Cambrian Intelligence The Early History of the New AI. MIT Press, 1999
- **Kortenkamp, D ; Basso, R, P ; Murphy, R.** Artificial Intelligence and Mobile Robots. AAAI Press, 1998
- **Thrun, s ; Burgard, W ; Fox, D.** Probabilistic Robotics. MIT Press, 2005
- Integrating Robotic Research: A survey of robotic wheelchair development. **Yanco, H, A.** Proc AAAI Spring Symposium on Integrating Robotics Research. AAAI Press, 1998
- **Miller D, P ; Slack, M, G.** Designing and testing a low-cost robotic wheelchair prototype. *Autonomous Robotics,* 1995, vol. 2, 77-88
- Semi-autonomous mobility verses semi-mobile autonomy. **Miller, D, P.** Proc AAAI Spring Symposium on Agent with Adjustable Autonomy. AAAI Press, 1999